# EUROPEAN PATENT APPLICATION

(11) **EP 4 541 506 A1**
(43) Date of publication of application: **23.04.2025**
(21) Application number: 24207511.7
(22) Date of filing: 18.10.2024
(51) Int. Cl.: B23P 19/08, B23P 19/00, B25B 27/00, B25B 27/28, F16J 15/3268, F16L 1/00

(54) **ASSEMBLY AND METHOD FOR MOUNTING A SEAL OF A PIPE COUPLING**

(30) Priority: 19.10.2023 NL 2036077
(71) Applicant: Dyka B.V., 8331 LJ Steenwijk (NL)
(72) Inventor: KINGMA, Peter, 8331 LJ STEENWIJK (NL); DIJKSTRA, Arnold, 8331 LJ STEENWIJK (NL)
(74) Representative: Geurts, Franciscus Antonius

(57) **Abstract**

The invention relates to an assembly comprising a seal feeding device (50) and a seal mounting device (150) for mounting a seal (20) of a pipe coupling (1), wherein the seal comprises a mounting ring (21) with a mounting ring outer diameter (D3) that merges into a flexible seal ring (30), wherein the seal ring (30) comprises a seal base ring (31) that merges into an inwardly projecting engagement body (32),wherein the seal feeding device (50) comprises a stock holder (73) for a seal stock (40) having a series of seals (20), and a seal transfer device (80) for picking out a seal from the seal stock, wherein the seal mounting device (150) comprises a seal funnel (155) for receiving the seal,

wherein the seal transfer device (80) comprises a transfer claw (81) that comprises at least one transfer gripper (87) with an outwardly open gripping slot (88) for receiving the inwardly projecting engagement body (32) of the seal.

## Description

### BACKGROUND

The invention relates to an assembly and a method for mounting a seal of a pipe coupling.

Pipe couplings are used to connect pipes to each other, for example plastic sewage pipes. For this application, the pipe couplings have a cylindrical casing that comprises a cylindrical insertion wall that defines a cylindrical insertion channel or socket for the pipe to be inserted. The seal is permanently mounted inside the cylindrical casing during the manufacturing of the pipe coupling.

### SUMMARY OF THE INVENTION

The seal may be mounted into the casing manually, which is labor intensive, or by means of a machine, wherein high pressure forces are exerted onto the seal that may deform the casing. Alternatively the seal is integrally formed with the cylindrical casing by using 2K injection molding, wherein the complexity of the injection molds and the injection operation depends on the size of the components, which is not preferred.

It is an object of the present invention to provide an assembly and a method for mounting a seal of a pipe coupling in a cost efficient manner.

According to a first aspect, the invention provides an assembly comprising a seal feeding device and a seal mounting device for mounting a seal of a pipe coupling,
wherein the seal comprises a mounting ring with a mounting ring outer diameter that merges into a flexible seal ring, wherein the seal ring comprises a seal base ring that merges into an inwardly projecting engagement body,
wherein the seal feeding device comprises a stock holder for a seal stock having a series of seals, and a seal transfer device for picking out a seal from the seal stock,
wherein the seal mounting device comprises a seal funnel for receiving the seal, wherein the seal funnel comprises an entry opening with an entry opening diameter for the seal, an ejection opening with an ejection opening diameter for the seal, and a funnel surface that extends between the entry opening and the ejection opening, wherein the entry opening diameter is larger than the mounting ring outer diameter, and the ejection opening diameter is smaller than the mounting ring outer diameter,
wherein the seal transfer device comprises a transfer claw for engagement of the seal distributed along a circumference of the seal, and a drive for moving the transfer claw through the seal funnel in a transfer direction from the entry opening to the ejection opening, wherein the transfer claw comprises at least one transfer gripper with an outwardly open gripping slot for receiving the inwardly projecting engagement body of the seal.

The inwardly projecting engagement body of the flexible seal is received in the outwardly open gripping slot, whereby the entire seal can move along with the transfer claw through the seal funnel to come in contact with the funnel surface. When the mounting ring engages the funnel surface, any further movement along with the transfer claw is blocked whereby the inwardly projecting engagement body escapes from the outwardly open gripping slot. The transfer claw can ensure that the seal is properly positioned inside the seal funnel, in particular to be evenly engaged by a seal pusher for automated processing, which is cost effective.

In an embodiment the funnel surface tapers from the entry opening towards the ejection opening.

In an embodiment thereof the funnel surface linearly or regressively tapers from the entry opening towards the ejection opening, whereby the mounting ring can come in contact with the seal funnel along its entire circumference in a controlled manner about halfway between the entry opening and the ejection opening.

In an embodiment the transfer claw is moveable between a seal pick out position at the seal feeding device, through the seal funnel to a seal transferred position outside the seal funnel.

In an embodiment the transfer claw comprises multiple transfer grippers, a claw base and a drive for moving the transfer grippers with respect to the claw base between a retracted position and a radially outspread engaging position in which the inwardly projecting engagement body is received in the gripping slots.

In an embodiment the stock holder comprises a seal guide that bounds a stock channel for the seal stock, wherein the seal feeding device comprises a seal separator along the stock channel for receiving and separating the seal from the next following seal of the seal stock.

In an embodiment the seal separator comprises a stock passage, and multiple first separating grippers and multiple second separating grippers that extend alternatingly around the stock passage, wherein the first separating grippers have a first separating finger and a drive for moving the first separating finger between a retracted position and a seal engaging position, and wherein the second separating grippers have a second separating finger and a drive for moving the second separating finger between a retracted position and a seal engaging position, wherein the second separating fingers are positioned to engage the seal, and the first separating fingers are positioned to engage a next following seal from the seal stock.

In an embodiment the seal stock has a series of mutually abutting seals in which the mounting ring of a seal abuts the flexible seal ring of a next following seal of the seal stock.

In an embodiment the seal funnel comprises a circumferentially extending lock groove that is recessed from the funnel surface for confining the mounting ring in the seal funnel along its circumference. The seal is thereby locked with respect to the seal funnel. This allows the seal funnel to have any orientation with respect to the seal feeding device.

In an embodiment the seal funnel comprises an overhanging pipe coupling center edge along the ejection opening for insertion into a cylindrical casing of the pipe coupling in which the seal is mounted.

In an embodiment the seal mounting device comprises a seal pusher for pushing the seal in the seal funnel in a push direction through the ejection opening and a drive for moving the seal pusher in the push direction, wherein the seal pusher comprises a pusher mandrel and a distal push surface on the pusher mandrel for engagement of the mounting ring. In this embodiment the assembly comprises a seal mounting device for mounting a seal of a pipe coupling by pushing it through a seal funnel. In the seal funnel the initial mounting ring outer diameter of the mounting ring is reduced when it is pushed along the funnel surface towards the ejection opening. Due to the reduction of the mounting ring outer diameter, the mounting ring is elastically compressed and biased, whereby it can launch itself out of the ejection opening and into a cylindrical casing of a pipe coupling.

In an embodiment thereof the seal pusher comprises multiple seal punches that project radially outwards from the pusher mandrel, and wherein the seal funnel comprises corresponding punch passages for the seal punches that are recessed from the funnel surface and that extend in the push direction. When the mounting ring has its initial mounting ring outer diameter, it may be engaged by the seal punches, and when the mounting ring outer diameter is reduced towards the ejection opening, the seal punches enter the punch passages to be parked there while the distal push surface pushes the biased mounting ring through the ejection opening. Over the entire stroke the seal pusher is in contact with the mounting ring to ensure that it is evenly biased and properly positioned with respect to the ejection opening. The seal of a pipe coupling can thereby be handled in an automated way, which is cost efficient.

In an embodiment the punch passages debouch in the ejection opening, whereby the seal punches can move along with the distal push surface up to the ejection opening.

In an embodiment the seal punches have a distal surface that form part of the distal push surface, whereby the mounting ring is in contact with an even push surface over the entire movement towards the ejection opening.

In an embodiment the seal mounting device comprises multiple seal funnels and a seal funnel exchange mechanism for exchanging the seal funnels with respect to the seal transfer device, whereby the seal that is transferred into the seal funnel can be mounted in the cylindrical casing of a pipe coupling after the seal funnels are exchanged. This can be performed in an automated way.

In an embodiment the mounting ring is made of a rigid, form stable plastic.

In an embodiment the seal is made by means of 2K molding of different materials for the mounting ring and the seal ring.

According to a second aspect, the invention provides a method for transferring a seal by means of an assembly according to any one of the preceding claims, wherein the transfer claw engages the seal by receiving the inwardly projecting engagement body of the seal in the outwardly open gripping slot of the transfer gripper, and wherein the transfer claw moves the engaged seal in a transfer direction from the entry opening to the ejection opening of the seal funnel, wherein the seal engages the funnel surface along its circumference and the inwardly projecting engagement body of the seal escapes from the gripping slot of the transfer gripper by elastic expansion of the flexible seal ring.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1A and 1B are an isometric view and a partial longitudinal section of a seal feeding device for feeding separate seals from a seal stock, and a seal mounting device for mounting a seal to a cylindrical casing of a pipe coupling according to the invention;
Figures 2A and 2B are an isometric view and a partial longitudinal section of the seal feeding device and the seal mounting device of figures 1A and 1B without the seals;
Figure 3 is an isometric view of the pipe coupling of figures 1A and 1B with the mounted seal;
Figures 4A and 4B are an isometric view and a longitudinal cross section of the seal before mounting to the cylindrical casing of the pipe coupling of figure 3;
Figures 5A and 5B are a top view and a longitudinal section of a separator of the seal feeding device as shown in figures 2A and 2B;
Figures 6A and 6B are an isometric view and a side view of a seal transfer device of the seal feeding device as shown in figures 2A and 2B;
Figures 7A and 7B are an isometric view of a seal funnel and a seal pusher of the seal mounting device as shown in figures 2A and 2B, and a bottom view of the seal pusher;
Figure 8 is a detailed longitudinal cross section of the seal funnel of figure 7A that is positioned on the cylindrical casing of the pipe coupling;
Figure 9 is an isometric view of an alternative seal funnel for the seal mounting device as shown in figures 2A and 2B; and
Figure 10 is a detailed longitudinal cross section of the alternative seal funnel of figure 9.

### DETAILED DESCRIPTION OF THE INVENTION

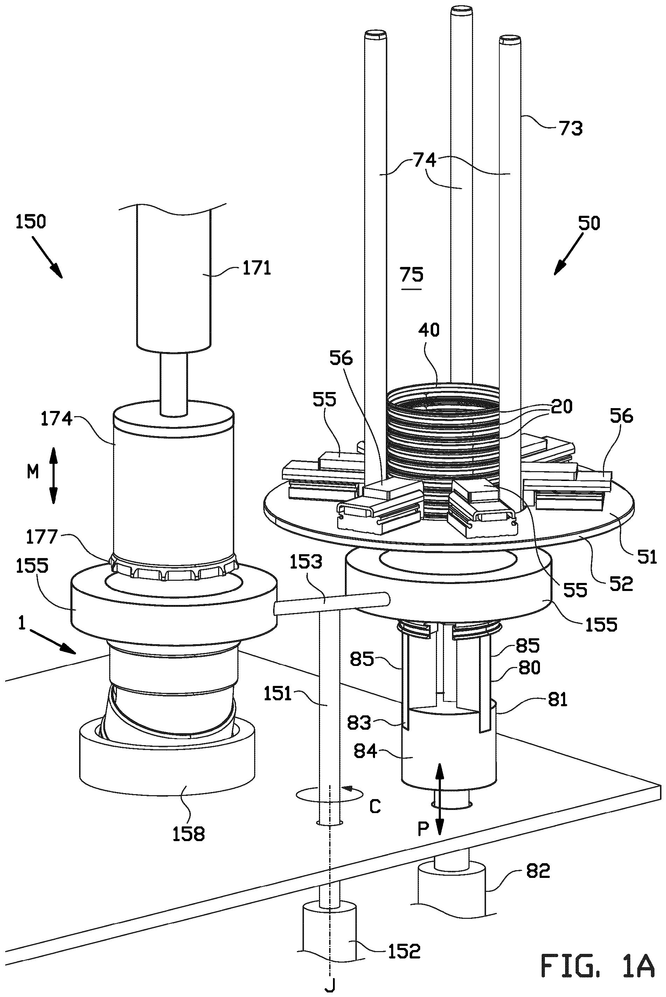

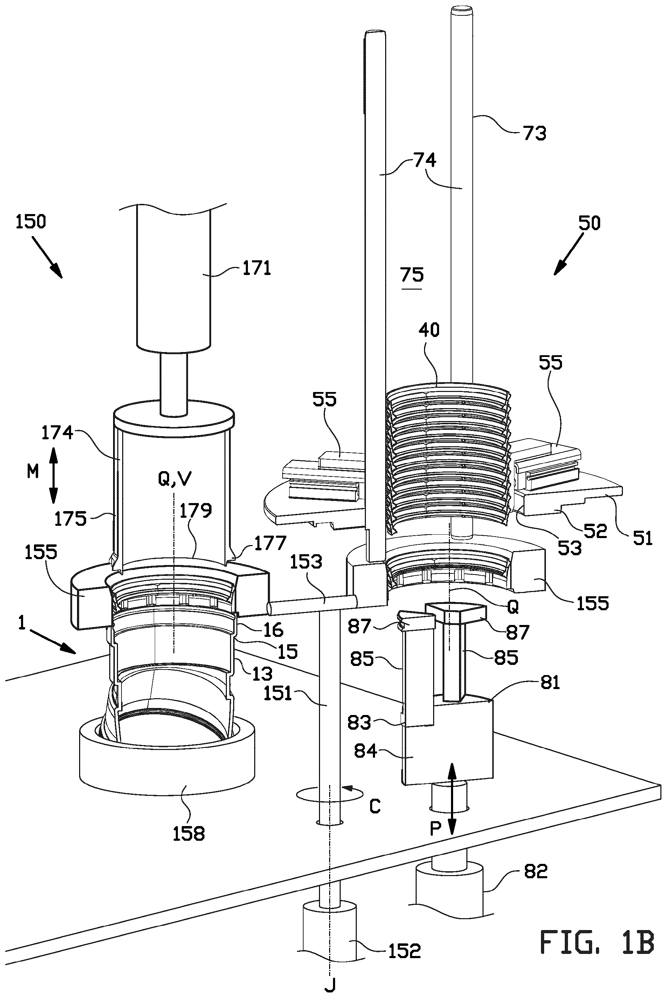

Figures 1A and 1B show an assembly comprising a seal feeding device 50 for feeding separated seals 20 from a seal stock 40 having a series of seals 20, and a seal mounting device 150 for mounting a seal 20 of a pipe coupling 1 according to the invention.

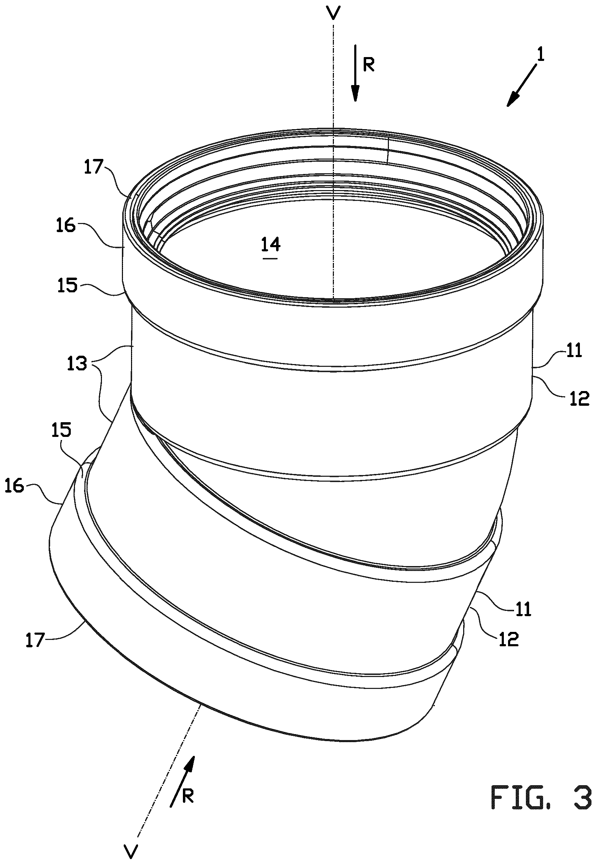

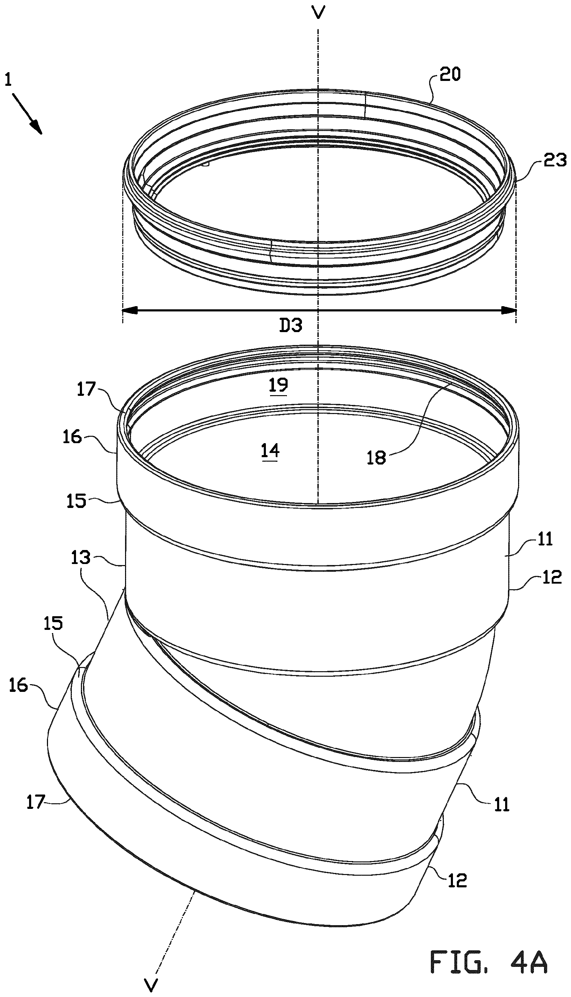

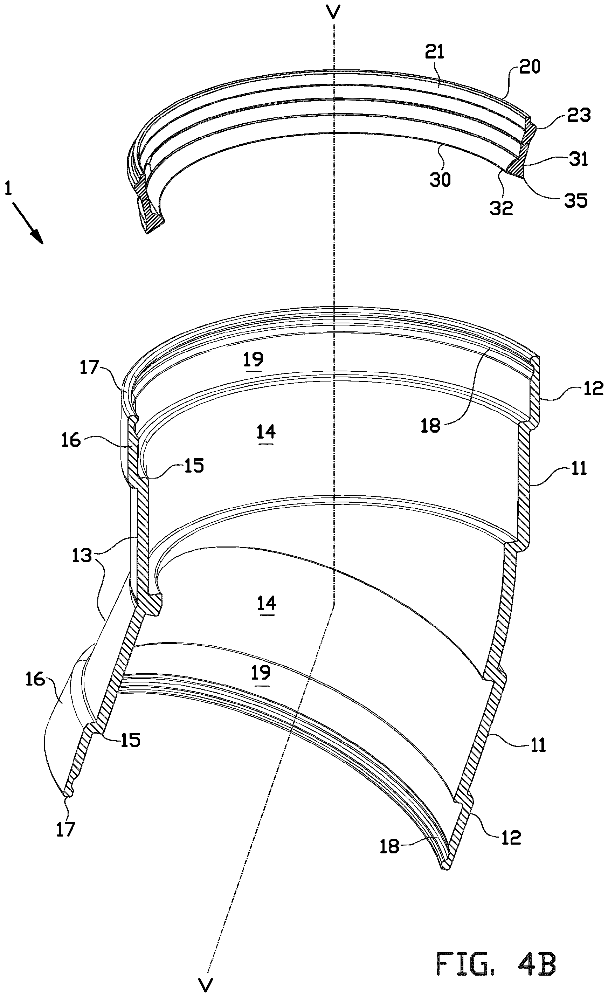

The pipe coupling 1 is shown in figures 4A and 4B and comprises in this example two opposite insertion parts 11 or fittings each with a central axis V for insertion of a not shown pipe in an inserting direction R parallel to the central axis V. In this example the pipe coupling 1 forms a bow coupling or bend in which the central axes V of the opposite insertion parts 11 are under an angle of 30 degrees. Each insertion part 11 comprises a cylindrical casing 12 that is made of a rigid, form stable plastic, for example a olefin based thermoplastic, preferably polyethylene (PE), polypropylene (PP) or polyvinylchloride (PVC), or a biologic thermoplastic, preferably polylactic acid (PLA) . The cylindrical casing 12 comprises a cylindrical insertion wall 13 that defines a cylindrical insertion channel 14 or socket for the pipe to be inserted. The insertion wall 14 merges via a diameter enlargement 15 into a cylindrical mounting wall 16 with a distal edge 17 that defines a seal chamber 19. The mounting wall 16 is provided with a circumferentially extending mounting channel 18 adjacent to the distal edge 17. Each insertion part 11 comprises a seal 20 of which only one is shown in figures 3, 4A and 4B. The pipe coupling 1 is used for coupling sewage pipes to each other, that are typically made of plastic hand have a diameter of 32 mm - 150 mm.

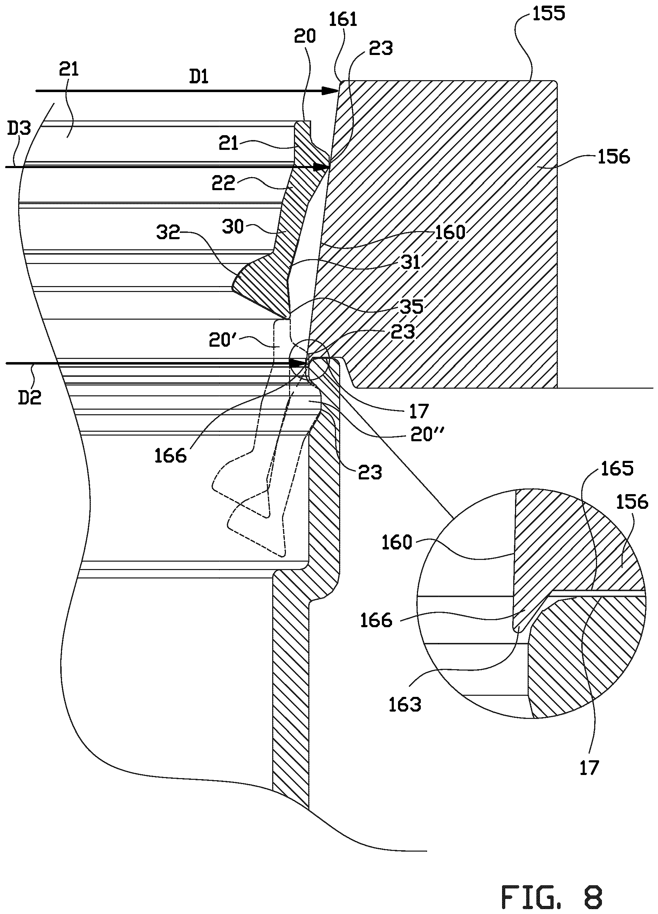

Figure 8 shows the cross section of the seal 20 in most detail. The seal 20 comprises a mounting ring 21 that merges into a seal ring 30. The mounting ring 21 comprises a mounting base ring 22 that merges into a radially outward projecting mounting rim 23 that extend along the entire circumference of the seal 20. The mounting ring 21 is made of a rigid, form stable plastic, for example a olefin based thermoplastic, preferably polyethylene (PE), polypropylene (PP) or polyvinylchloride (PVC), or a biologic thermoplastic, preferably polylactic acid (PLA). The mounting rim 23 defines a mounting ring outer diameter D3 that is in this example the largest outer diameter of the entire seal 20. The seal ring 30 comprises a seal base ring 31 that merges at one side into the mounting base ring 22. At its distal side, the seal base ring 31 merges into a radially inwardly projecting engagement body 32, and into a radially outward projecting engagement body 35 that all extend along the entire circumference of the seal 20. The seal ring 30 is made of a flexible plastic, for example a thermoplastic elastomer (TPE) or a technical rubber, preferably a netted olefin based thermoplastic elastomer (TPV). The seal 20 can be manufactured by means of two components (2K) injection molding using the two different plastics.

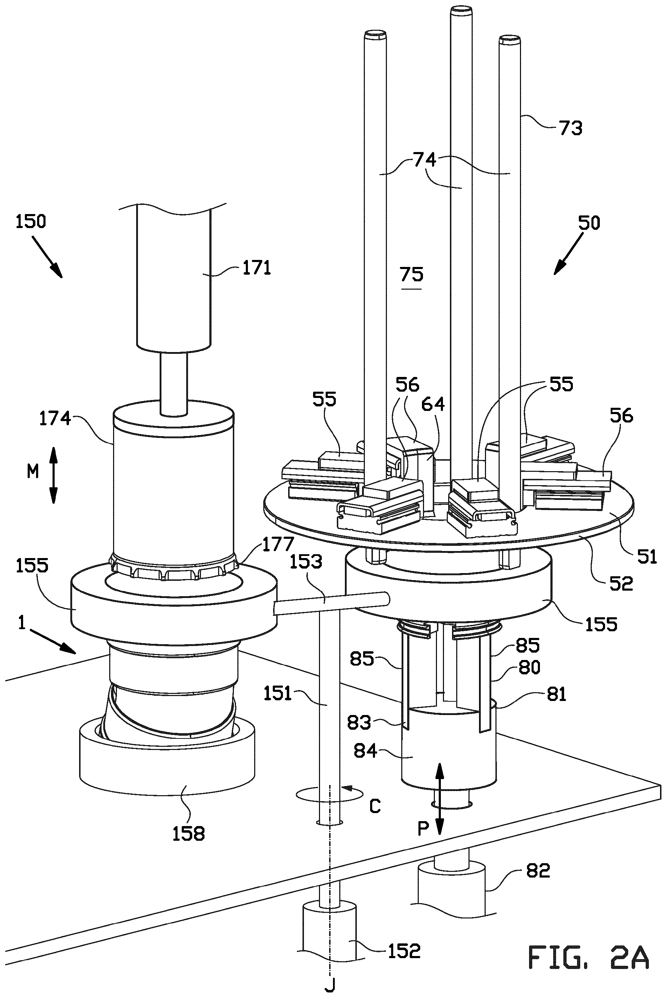

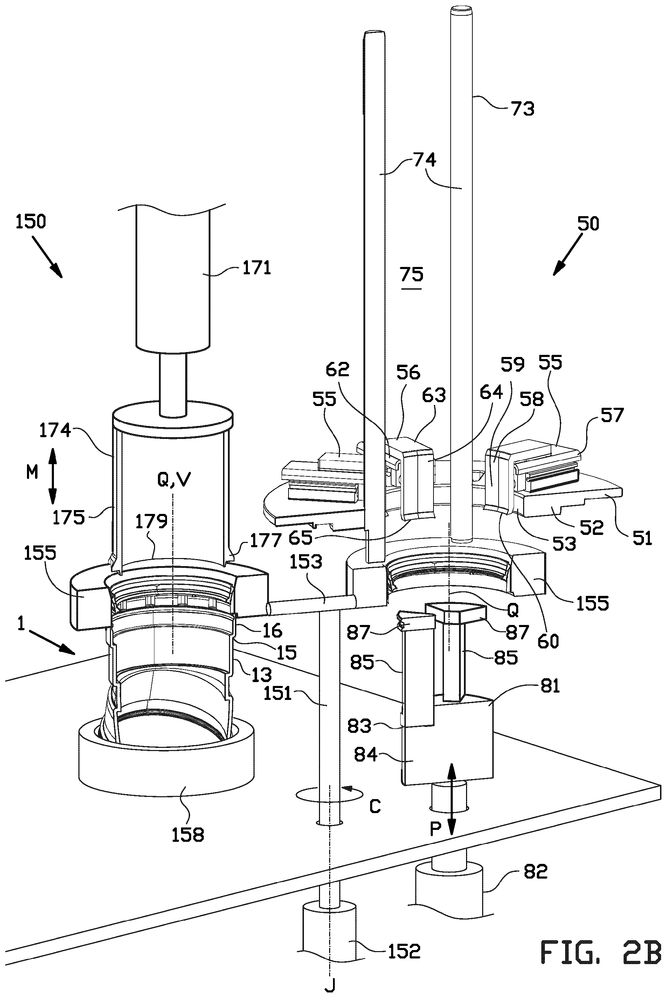

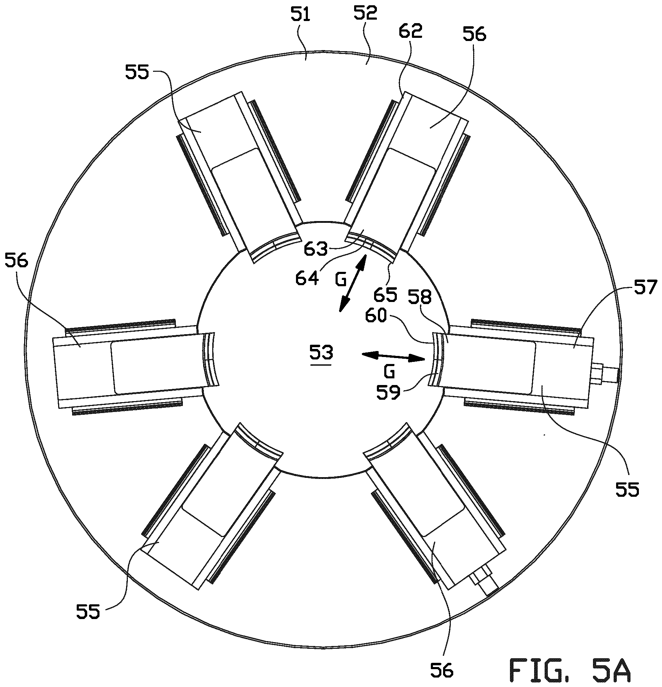

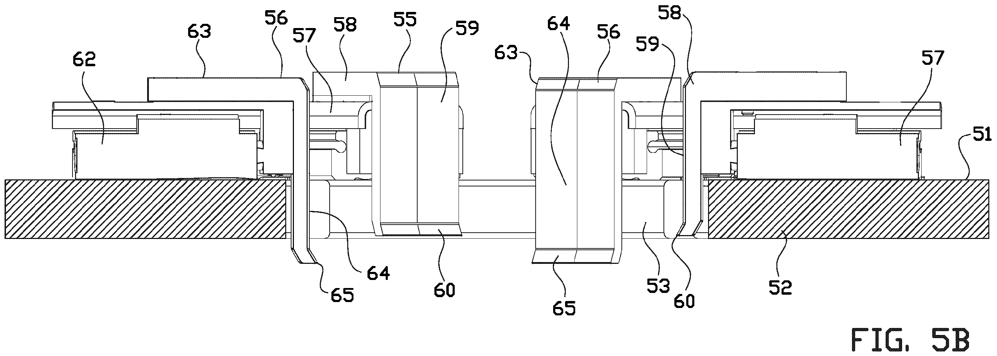

As shown in figures 1A, 1B, 2A, 2B, 5A and 5B, the seal feeding device 50 comprises a seal separator 51 having a base frame 52 with a stock passage 53, and in this example three first separating grippers 55 and three second separating grippers 56 that are alternatingly distributed around the stock passage 53. The seal feeding device 50 comprises a stock holder 73 that comprises in this example multiple parallelly extending seal guides 74 that bound a vertical stock channel 75 that extends through the stock passage 53. The first separating grippers 55 each comprise a first pneumatic linear drive 57 on the base frame 52 that reciprocally moves a first separating finger 58 in a radial gripping direction G with respect to the stock passage 53 between a retracted position and an engaging position. The first separating finger 58 comprises a first abutment surface 59 that extends parallel to and through the stock passage 53, and an inwardly projecting first hook 60. The first abutment surface 59 and the first hook 60 both have transverse to the stock passage 53 a curvature with a constant radius with respect to the center of the stock channel 75. The second separating grippers 56 each comprise a second pneumatic linear drive 62 on the base frame 52 that reciprocally moves a second separating finger 63 in the radial gripping direction G with respect to the stock passage 53 between a retracted position and an engaging position. The second separating finger 63 comprises a second abutment surface 64 that extends parallel to and through the stock passage 53, and an inwardly projecting second hook 65. The second abutment surface 64 and the second hook 65 both have transverse to the stock passage 53 a curvature with a constant radius with respect to the center of the stock channel 75. The second hooks 65 extend deeper or lower than the first hooks 60 over a distance that is equal to the height of one seal 20. The first pneumatic linear drives 57 are pneumatically parallel connected, and the second pneumatic linear drives 62 are pneumatically parallel connected for operation in two separate groups by means of a not shown controlled pressurized air source.

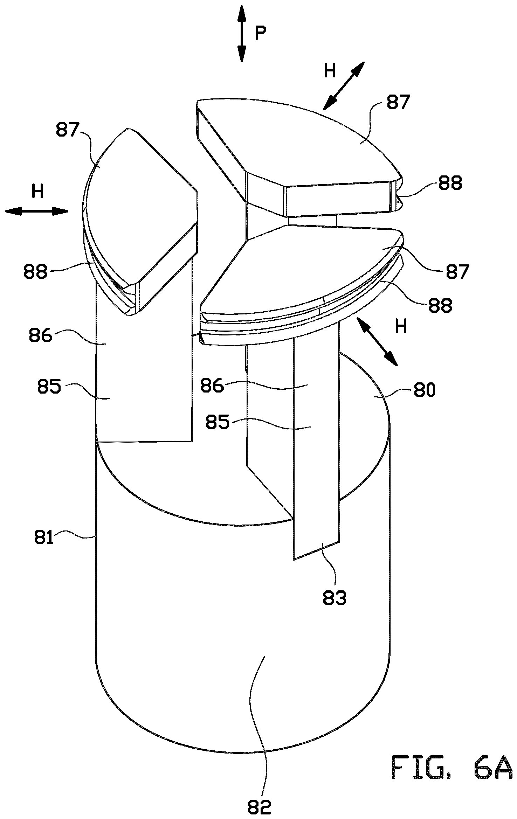

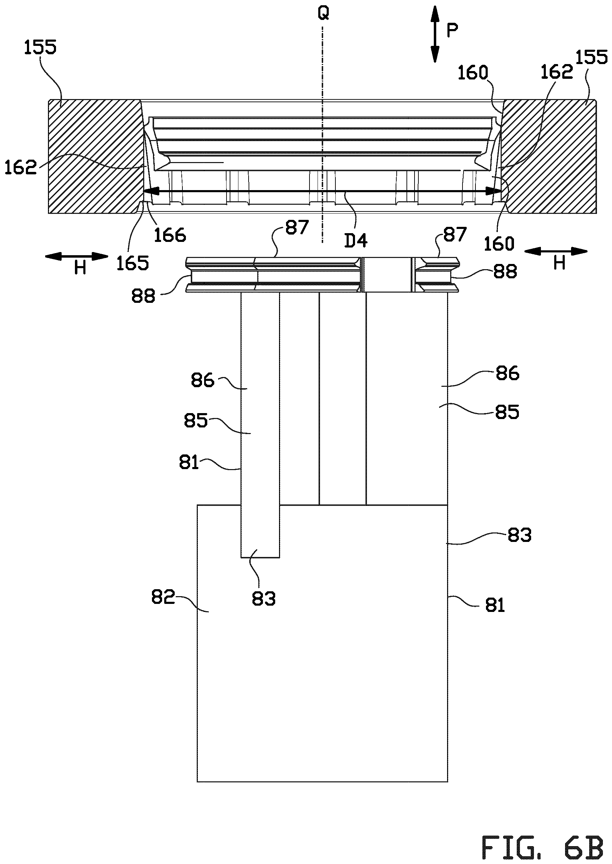

As shown in figures 1A, 1B, 2A, 2B, 6A and 6B, the seal feeding device 50 comprises a seal transfer device 80 in the projection of the stock channel 75. The seal transfer device 80 comprises a third pneumatic linear drive 82 that reciprocally moves a transfer claw 81 in an axial transfer direction P with respect to the stock passage 53 between an upper seal pick out position and a lower seal transferred position. The transfer claw 81 comprises a claw base 84 and in this example three fourth pneumatic linear drives 83 that reciprocally move three transfer fingers 85 in a radial grab direction H with respect to the stock passage 53 between a retracted position and a radially outspread engaging position. The transfer fingers 85 each comprise a stem 86 and a transfer gripper 87 with a gripping slot 88 that is open in a radial outward direction. The gripping slot 88 has a curvature with a constant radius with respect to the center of the stock channel 75. The fourth pneumatic linear drives 83 are pneumatically parallel connected for operation by means of a not shown controlled pressurized air source.

The seal mounting device 150 comprises a seal funnel exchange mechanism, in this example a carousel 151 that comprises a carousel drive motor 152 for rotation of a support 153 around a rotation axis J parallel to the stock channel 75 in an exchange direction C. The seal mounting device 150 comprises in this example two seal funnels 155 on the support 153 to be rotated between a seal pick up position between the seal separator 51 and the seal transfer device 80, and a seal mounting position at a pipe coupling 1. At the seal mounting position the seal mounting device 150 comprises a schematically indicated pipe coupling holder 158 that keeps one of the cylindrical casings 12 of the pipe coupling 1 with its central axis V aligned with a central axis Q of the seal funnel 155.

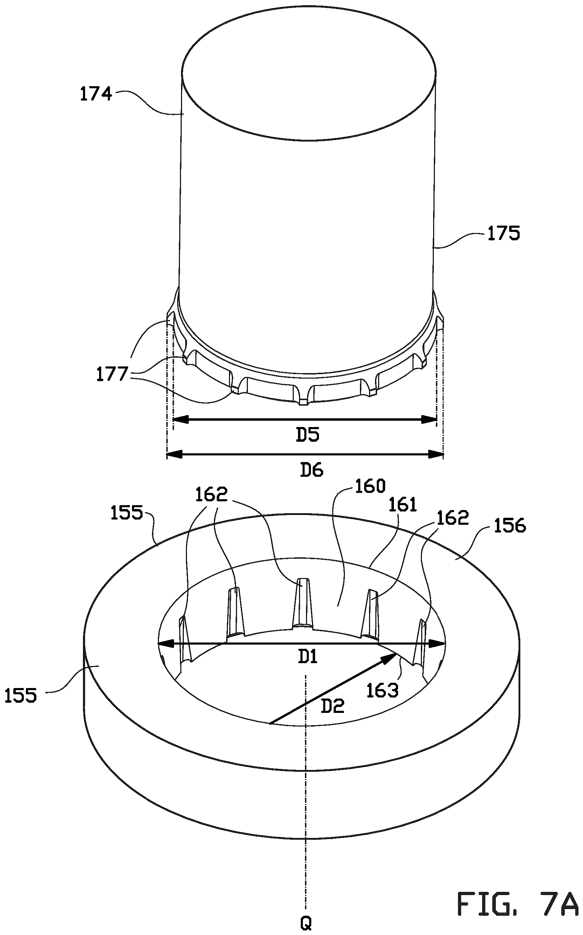

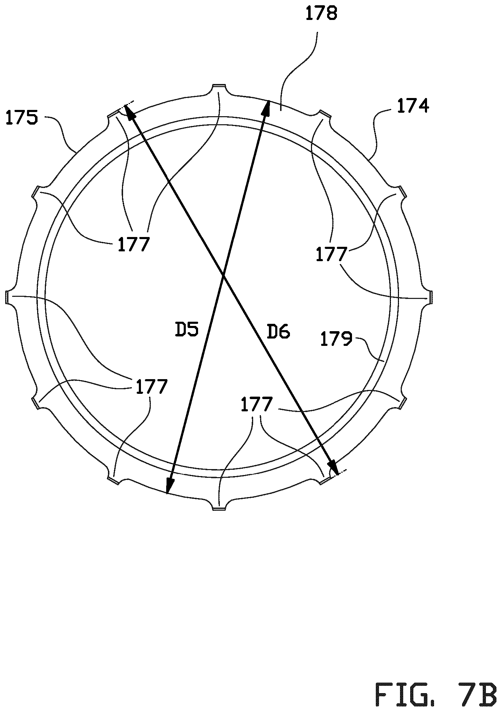

As best shown in figures 7A, 7B and 8, each seal funnel 155 comprises an funnel ring 156 having the central axis Q. The funnel ring 156 bounds an entry opening 161 with an entry opening diameter D1 and an ejection opening 163 with smaller ejection opening diameter D2, and comprises there between a funnel surface 160 that fluently and linearly or regressively tapers downwards to the ejection opening 163. The entry opening diameter D1 is larger than the mounting ring outer diameter D3, and the ejection opening diameter D2 is smaller than the mounting ring outer diameter D3. The funnel surface 160 ends on an overhanging pipe coupling center edge 166 that bounds the ejection opening 163 and that extends along a center channel 165 in the bottom of the funnel ring 156 in which the distal edge 17 of the pipe coupling 1 fits. At the ejection opening 163 the tangent of the funnel surface 160 extends substantially parallel to the central axis Q. The funnel surface 160 is circular in subsequent cross sections transverse to the central axis Q. The funnel ring 156 comprises multiple punch passages 162, in this example twelve, that are evenly distributed along the circumference of the funnel surface 160. The punch passages 162 extend parallel to the central axis Q. The punch passages 162 have an arc shaped cross section transverse to the central axis Q and have constant depth D4 with respect to the central axis Q. The punch passages 162 are recessed from and merge into the funnel surface 160, wherein in the direction of the central axis Q the entry is about halfway the funnel surface 160 and the exit is in the overhanging pipe coupling center edge 166.

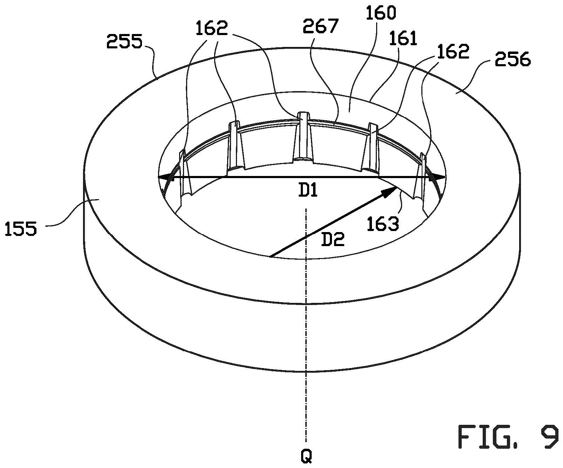

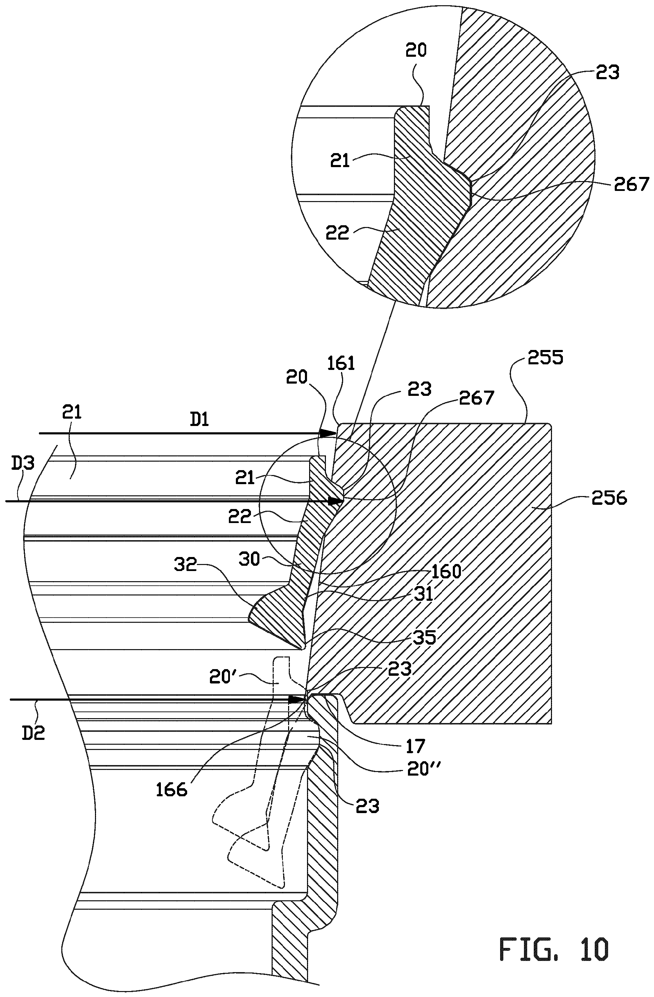

Figures 9 and 10 show an alternative seal funnel 255 for the seal mounting device 150. The features that correspond with the seal funnel 155 as described here before are provided with the same reference numbers. Only the deviating features of the alternative seal funnel 155 are described. The alternative seal funnel 255 comprises a funnel ring 256 having the central axis Q. The funnel ring 256 comprises a circumferentially extending lock groove 267 that is recessed from the funnel surface 160 for confining the mounting rim 23 of the mounting ring 21 in the seal funnel 255 along its circumference, whereby the position of the seal 20 with respect to the seal funnel 255 is locked and well defined. The locking groove 267 intersects the punch passages 162 and has the same depth as the punch passages 162 at the intersections. The mounting ring outer diameter D3 is for example slightly and reversible elastically reduced by sliding along the funnel surface 160 between the entry opening 161 and the lock groove 267 to move the mounting rim 23 into the lock groove 267 where it remains confined under its initial mounting ring outer diameter D3.

The seal mounting device 150 comprises a fifth pneumatic linear drive 171 that reciprocally moves a seal pusher 174 in an axial push direction M along the central axis Q of the seal funnel 155 between a retracted position above the seal funnel 155 and an ejection position inside the seal funnel 155. The seal pusher 174 comprises a cylindrical hollow pusher mandrel 175 having at its distal end an outer diameter D5 that is smaller than the ejection opening diameter D2 of the funnel surface 160. The pusher mandrel 175 merges into multiple seal punches 177 that radially project outwards from the pusher mandrel 175. The amount of seal punches 177 is equal to the amount of punch passages 162. The seal punches 177 are aligned with the punch passages 162, have the same arc shaped cross section transverse to the central axis Q as the punch passages 162 and fit inside the punch passages 162. Transverse to the central axis Q the outer ends of the seal punches 177 are located on a circumscribed circle with a pushing diameter D6 that is larger than the ejection diameter D2 of the funnel surface 160. As best shown in figure 7B the pusher mandrel 175 and the seal punches 177 together define a flat distal push surface 178 of the seal pusher 174 that extends transverse to the central axis Q. The seal pusher 174 comprises a seal center edge 179 projecting from the pusher mandrel 175 that extends along the circumference of the pusher mandrel 175.

The assembly of the seal feeding device 50 and the seal mounting device 150 furthermore comprises an electronic controller to control the controlled pressurized air sources for the first pneumatic linear drive 57, the second pneumatic linear drive 62, the third pneumatic linear drive 82, the fourth pneumatic linear drives 83, the fifth pneumatic linear drive 171 and the carrousel drive motor 152. This electronic controller is programmed to perform the steps as described below for mounting seals 20 of the pipe couplings 1.

The mounting of the seals 20 of a series of pipe couplings 1 is initiated by moving the first separating fingers 58 in their retracted position, moving the second separating fingers 63 in their engaging position, moving the transfer fingers 85 in their retracted position, moving the transfer claw 81 in its seal transferred position, moving the seal pusher 174 in its retracted position and rotating one of the seal funnels 155 in its seal pickup position under the seal feeding device 50. Subsequently the seal stock 40 is inserted in the stock channel 75 of the stock holder 73. The flexible seal rings 30 in the seal stock 40 are all directed towards the seal transfer device 80. The lowermost seal 20 of the seal stock 40 enters between the second separating fingers 63, wherein the mounting ring 21 hangs on the second hooks 65 and the seal ring 30 hangs freely downwards therefrom. The next following seal 20 extends with its mounting ring 21 aside the first hooks 60.

Subsequently the transfer claw 81 is moved to its seal pick out position in which the gripping slots 88 face the radially inwardly projecting engagement body 32, and the transfer fingers 85 are moved to their outspread engaging position whereby the radially inwardly projecting engagement body 32 is enclosed in the gripping slots 88. Subsequently the first separating fingers 58 are moved in their engaging position, followed by moving the second separating fingers 63 to the retracted position whereby the engaged seal 20 can be separated from the next following seal 20.

Subsequently the transfer claw 81 is moved to its seal transferred position. Over this stroke the engaged seal 20 is pulled through the entry opening 161. At an intermediate transfer position of the transfer claw 81, the mounting rim 23 of the mounting ring 21 engages the tapering funnel surface 160 along its circumference near the entries of the punch passages 162. As from this transfer position the mounting ring 21 gets stuck and the radially inwardly projecting engagement body 32 elastically escapes from the ongoing downwardly moving gripping slots 88. When the alternative seal funnel 255 is applied, the mounting rim 23 of the mounting ring 21 snaps into the lock groove 267 as shown in figure 10, whereby the seal 20 is locked with respect to the alternative seal funnel 255 instead of confined under gravity as with the seal funnel 155 as described here before. The alternative seal funnel 255 can then be rotated in any position and that is followed by the seal 20. In both cases, when the transfer claw 81 has reached its lowest seal transferred position, the carousel drive motor 152 is powered whereby the seal funnels 155 exchange their seal pick up position and their seal mounting position. The pipe coupling 1 is put in the pipe coupling holder 158 to keep the cylindrical casing 12 to which the seal 20 is mounted with its central axis V upright and aligned with the central axis Q of the seal funnel 155. The distal edge 17 of the fixated pipe coupling 1 is positioned centered by the overhanging pipe coupling center edge 166 of the seal funnel 155 and positioned in the center channel 165 of the seal funnel 155. In the seal separator 51 the seal stock 40 is lowered to expose the next following seal 20 of the seal stock 40 for a next cycle by moving the second separating fingers 63 to the engaging position and subsequently moving the first separating fingers 58 to their retracted position.

Subsequently the seal pusher 174 is moved in the push direction M to its ejection position, whereby the distal push surface 178 enters through the entry opening 161 of the seal funnel 155 and engages the mounting ring 21. Initially only the seal punches 177 are in contact with the mounting ring 21. The seal pusher 174 pushes the mounting ring 21 downwards along the tapering funnel surface 160. When the alternative seal funnel 255 is applied, the mounting rim 23 of the mounting ring 21 snaps out of the lock groove 267. In both cases, its outer diameter is reversible elastically reduced at the mounting rim 23 and inwardly biased to the ejection opening diameter D2. Finally only the pusher mandrel 175 is in contact with the mounting ring 21. This position is indicated with seal 20' in broken lines. The pusher mandrel 175 pushes the mounting rim 23 over the overhanging pipe coupling center edge 166 whereby the biased mounting ring 21 launches itself beyond the distal edge 17 of the cylindrical casing 12 into the seal chamber 19 by elastic expansion. After the launch the mounting rim 23 enters the mounting channel 18 and remains confined therein as indicated in figure 8 with seal 20'' in broken lines. Finally the seal pusher 174 is retracted and the carousel 151 is rotated by the carousel drive motor 152 half a revolution in the exchange direction C to position the other of the two seal funnels 155 under the seal pusher 174 for mounting the seal 20 of a next pipe coupling 1.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

As will have been understood based on the above description, particularly preferred embodiments of the invention are described by the following items.
1. Assembly comprising a seal feeding device (50) and a seal mounting device (150) for mounting a seal (20) of a pipe coupling (1),
   wherein the seal comprises a mounting ring (21) with a mounting ring outer diameter (D3) that merges into a flexible seal ring (30), wherein the seal ring (30) comprises a seal base ring (31) that merges into an inwardly projecting engagement body (32),
   wherein the seal feeding device (50) comprises a stock holder (73) for a seal stock (40) having a series of seals (20), and a seal transfer device (80) for picking out a seal from the seal stock,
   wherein the seal mounting device (150) comprises a seal funnel (155) for receiving the seal, wherein the seal funnel comprises an entry opening (161) with an entry opening diameter (D1) for the seal, an ejection opening (163) with an ejection opening diameter (D2) for the seal, and a funnel surface (160) that extends between the entry opening (161) and the ejection opening (163), wherein the entry opening diameter (D1) is larger than the mounting ring outer diameter (D3), and the ejection opening diameter (D2) is smaller than the mounting ring outer diameter (D3),
   wherein the seal transfer device (80) comprises a transfer claw (81) for engagement of the seal (20) distributed along a circumference of the seal, and a drive (83) for moving the transfer claw through the seal funnel in a transfer direction (P) from the entry opening (161) to the ejection opening (163), wherein the transfer claw comprises at least one transfer gripper (87) with an outwardly open gripping slot (88) for receiving the inwardly projecting engagement body (32) of the seal.
2. Assembly according to claim 1, wherein the funnel surface (160) tapers from the entry opening (161) towards the ejection opening (163).
3. Assembly according to claim 2, wherein the funnel surface (160) linearly or regressively tapers from the entry opening (161) towards the ejection opening (163).
4. Assembly according to any one of the preceding claims, wherein the transfer claw (80) is moveable between a seal pick out position at the seal feeding device (50), through the seal funnel (155) to a seal transferred position outside the seal funnel.
5. Assembly according to any one of the preceding claims, wherein the transfer claw (80) comprises multiple transfer grippers (87), a claw base (84) and a drive (83) for moving the transfer grippers (87) with respect to the claw base between a retracted position and a radially outspread engaging position in which the inwardly projecting engagement body (32) is received in the gripping slots (88).
6. Assembly according to any one of the preceding claims, wherein the stock holder (73) comprises a seal guide (74) that bounds a stock channel (75) for the seal stock (40), wherein the seal feeding device (50) comprises a seal separator (51) along the stock channel for receiving and separating the seal (20) from the next following seal of the seal stock (40).
7. Assembly according to claim 6, wherein the seal separator (51) comprises a stock passage (53), and multiple first separating grippers (55) and multiple second separating grippers (56) that extend alternatingly around the stock passage, wherein the first separating grippers (55) have a first separating finger (58) and a drive (57) for moving the first separating finger between a retracted position and a seal engaging position, and wherein the second separating grippers (56) have a second separating finger (63) and a drive (62) for moving the second separating finger between a retracted position and a seal engaging position, wherein the second separating fingers (56) are positioned to engage the seal, and the first separating fingers (58) are positioned to engage a next following seal from the seal stock.
8. Assembly according to any one of the preceding claims, wherein the seal stock (40) has a series of mutually abutting seals (20) in which the mounting ring of a seal abuts the flexible seal ring of a next following seal of the seal stock.
9. Assembly according to any one of the preceding claims, wherein the seal funnel (255) comprises a circumferentially extending lock groove (267) that is recessed from the funnel surface (160) for confining the mounting ring (21) in the seal funnel (255) along its circumference.
10. Assembly according to any one of the preceding claims, wherein the seal funnel (155) comprises an overhanging pipe coupling center edge (166) along the ejection opening (163) for insertion into a cylindrical casing (12) of the pipe coupling (1) in which the seal (20) is mounted.
11. Assembly according to any one of the preceding claims, wherein the seal mounting device (150) comprises a seal pusher (174) for pushing the seal (20) in the seal funnel (155) in a push direction (M) through the ejection opening (163) and a drive (171) for moving the seal pusher (174) in the push direction, wherein the seal pusher comprises a pusher mandrel (175) and a distal push surface (178) on the pusher mandrel for engagement of the mounting ring (21).
12. Assembly according to claim 11, wherein the seal pusher comprises multiple seal punches (177) that project radially outwards from the pusher mandrel (175), and wherein the seal funnel (155) comprises corresponding punch passages (162) for the seal punches that are recessed from the funnel surface (160) and that extend in the push direction (M).
13. Assembly according to claim 12, wherein the punch passages (162) debouch in the ejection opening (163).
14. Assembly according to claim 12 or 13, wherein the seal punches (177) have a distal surface that form part of the distal push surface (178).
15. Assembly according to any one of the claims 11-14, wherein the seal mounting device (150) comprises multiple seal funnels (155) and a seal funnel exchange mechanism (151) for exchanging the seal funnels with respect to the seal transfer device (80).
16. Assembly according to any one of the preceding claims, wherein the mounting ring (21) is made of a rigid, form stable plastic.
17. Assembly according to any one of the preceding claims, wherein the seal (20) is made by means of 2K molding of different materials for the mounting ring (21) and the seal ring (30).
18. Method for transferring a seal (20) by means of an assembly according to any one of the preceding claims, wherein the transfer claw (81) engages the seal by receiving the inwardly projecting engagement body (32) of the seal in the outwardly open gripping slot (88) of the transfer gripper (87), and wherein the transfer claw (81) moves the engaged seal in a transfer direction (P) from the entry opening (161) to the ejection opening (163) of the seal funnel (155), wherein the seal (20) engages the funnel surface along its circumference and the inwardly projecting engagement body (32) of the seal escapes from the gripping slot (88) of the transfer gripper (87) by elastic expansion of the flexible seal ring (30).

## Claims

1. Assembly comprising a seal feeding device (50) and a seal mounting device (150) for mounting a seal (20) of a pipe coupling (1),
wherein the seal comprises a mounting ring (21) with a mounting ring outer diameter (D3) that merges into a flexible seal ring (30), wherein the seal ring (30) comprises a seal base ring (31) that merges into an inwardly projecting engagement body (32),
wherein the seal feeding device (50) comprises a stock holder (73) for a seal stock (40) having a series of seals (20), and a seal transfer device (80) for picking out a seal from the seal stock,
wherein the seal mounting device (150) comprises a seal funnel (155) for receiving the seal, wherein the seal funnel comprises an entry opening (161) with an entry opening diameter (D1) for the seal, an ejection opening (163) with an ejection opening diameter (D2) for the seal, and a funnel surface (160) that extends between the entry opening (161) and the ejection opening (163), wherein the entry opening diameter (D1) is larger than the mounting ring outer diameter (D3), and the ejection opening diameter (D2) is smaller than the mounting ring outer diameter (D3),
wherein the seal transfer device (80) comprises a transfer claw (81) for engagement of the seal (20) distributed along a circumference of the seal, and a drive (83) for moving the transfer claw through the seal funnel in a transfer direction (P) from the entry opening (161) to the ejection opening (163), wherein the transfer claw comprises at least one transfer gripper (87) with an outwardly open gripping slot (88) for receiving the inwardly projecting engagement body (32) of the seal.

2. Assembly according to claim 1, wherein the funnel surface (160) tapers from the entry opening (161) towards the ejection opening (163).

3. Assembly according to claim 2, wherein the funnel surface (160) linearly or regressively tapers from the entry opening (161) towards the ejection opening (163).

4. Assembly according to any one of the preceding claims, wherein the transfer claw (80) is moveable between a seal pick out position at the seal feeding device (50), through the seal funnel (155) to a seal transferred position outside the seal funnel.

5. Assembly according to any one of the preceding claims, wherein the transfer claw (80) comprises multiple transfer grippers (87), a claw base (84) and a drive (83) for moving the transfer grippers (87) with respect to the claw base between a retracted position and a radially outspread engaging position in which the inwardly projecting engagement body (32) is received in the gripping slots (88).

6. Assembly according to any one of the preceding claims, wherein the stock holder (73) comprises a seal guide (74) that bounds a stock channel (75) for the seal stock (40), wherein the seal feeding device (50) comprises a seal separator (51) along the stock channel for receiving and separating the seal (20) from the next following seal of the seal stock (40) wherein preferably the seal separator (51) comprises a stock passage (53), and multiple first separating grippers (55) and multiple second separating grippers (56) that extend alternatingly around the stock passage, wherein the first separating grippers (55) have a first separating finger (58) and a drive (57) for moving the first separating finger between a retracted position and a seal engaging position, and wherein the second separating grippers (56) have a second separating finger (63) and a drive (62) for moving the second separating finger between a retracted position and a seal engaging position, wherein the second separating fingers (56) are positioned to engage the seal, and the first separating fingers (58) are positioned to engage a next following seal from the seal stock.

7. Assembly according to any one of the preceding claims, wherein the seal stock (40) has a series of mutually abutting seals (20) in which the mounting ring of a seal abuts the flexible seal ring of a next following seal of the seal stock.

8. Assembly according to any one of the preceding claims, wherein the seal funnel (255) comprises a circumferentially extending lock groove (267) that is recessed from the funnel surface (160) for confining the mounting ring (21) in the seal funnel (255) along its circumference.

9. Assembly according to any one of the preceding claims, wherein the seal funnel (155) comprises an overhanging pipe coupling center edge (166) along the ejection opening (163) for insertion into a cylindrical casing (12) of the pipe coupling (1) in which the seal (20) is mounted.

10. Assembly according to any one of the preceding claims, wherein the seal mounting device (150) comprises a seal pusher (174) for pushing the seal (20) in the seal funnel (155) in a push direction (M) through the ejection opening (163) and a drive (171) for moving the seal pusher (174) in the push direction, wherein the seal pusher comprises a pusher mandrel (175) and a distal push surface (178) on the pusher mandrel for engagement of the mounting ring (21).

11. Assembly according to claim 11, wherein the seal pusher comprises multiple seal punches (177) that project radially outwards from the pusher mandrel (175), and wherein the seal funnel (155) comprises corresponding punch passages (162) for the seal punches that are recessed from the funnel surface (160) and that extend in the push direction (M), wherein the punch passages (162) preferably debouch in the ejection opening (163).

12. Assembly according to claim 11, wherein the seal punches (177) have a distal surface that form part of the distal push surface (178).

13. Assembly according to any one of the preceding claims, wherein the mounting ring (21) is made of a rigid, form stable plastic.

14. Assembly according to any one of the preceding claims, wherein the seal (20) is made by means of 2K molding of different materials for the mounting ring (21) and the seal ring (30).

15. Method for transferring a seal (20) by means of an assembly according to any one of the preceding claims, wherein the transfer claw (81) engages the seal by receiving the inwardly projecting engagement body (32) of the seal in the outwardly open gripping slot (88) of the transfer gripper (87), and wherein the transfer claw (81) moves the engaged seal in a transfer direction (P) from the entry opening (161) to the ejection opening (163) of the seal funnel (155), wherein the seal (20) engages the funnel surface along its circumference and the inwardly projecting engagement body (32) of the seal escapes from the gripping slot (88) of the transfer gripper (87) by elastic expansion of the flexible seal ring (30).
